# EUROPÄISCHE PATENTANMELDUNG

(11) **EP 1 715 263 A2**
(43) Veröffentlichungstag der Anmeldung: **25.10.2006**
(21) Anmeldenummer: 06005347.7
(22) Anmeldetag: 16.03.2006
(51) Int. Cl.: F25B 9/00, F25B 41/06, F25B 40/00

(54) **Klimaanlage, insbesondere für ein Kraftfahrzeug**

(30) Priorität: 21.04.2005 DE 102005018673
(71) Anmelder: Behr GmbH & Co. KG, 70469 Stuttgart (DE)
(72) Erfinder: Gerken, Thomas, Dipl.-Ing., 70499 Stuttgart (DE); Kemle, Andreas, Dipl.-Ing., 74321 Bietigheim-Bissingen (DE); Sickelmann, Michael, Dipl.-Ing., 70806 Kornwestheim (DE)
(74) Vertreter: Grauel, Andreas

(57) **Zusammenfassung**

Die Erfindung betrifft eine Klimaanlage, insbesondere für ein Kraftfahrzeug, umfassend einen Verdichter (1) zum Komprimieren eines Kältemittels mit einem Austritt für das komprimierte Kältemittel, einen dem Verdichter (1) in Strömungsrichtung des Kältemittels nachgeordneten Wärmetauscher (3) zur Kühlung des Kältemittels, und ein dem Wärmetauscher (3) nachgeordnetes Expansionsorgan (5) zur gezielten Druckerniedrigung des Kältemittels, wobei ein ab einer definierten Druckdifferenz in einer Richtung geöffnetes Vorspannventil (8, 8') vorgesehen ist. Eine Klimaanlage, bei der eine erhöhte Flexibilität bei der Anordnung der funktionellen Bauteile besteht, wird erfindungsgemäß dadurch geschaffen, daß das Vorspannventil (8, 8') in Strömungsrichtung nach dem Verdichter (1) und vor dem Austritt des Expansionsorgans (5) vorgesehen ist.

## Beschreibung

Die Erfindung betrifft eine Klimaanlage, insbesondere für ein Kraftfahrzeug, nach dem Oberbegriff des Anspruchs 1.

Es sind Klimaanlagen bekannt, bei denen der Verdichter dauerhaft mit einer Antriebsvorrichtung verbunden ist. Um eine Förderung des Kältemittels in der Stärke variieren zu können, sind solche Verdichter insbesondere als axiale Hubkolbenverdichter mit verstellbarem Kolbenhub ausgebildet, wobei eine Stellvorrichtung zumeist eine im Winkel einstellbare Taumelscheibe oder einen einstellbar gewinkelten Ring umfaßt. Solche Verdichter sind im Prinzip auf Nullförderung einstellbar, d.h. auf Kolbenhub Null. Um jedoch aus dieser Stellung heraus den Kolbenhub vergrößern zu können und um schädliches Oszillieren oder Schlagen der Mechanik in der Nullstellung zu vermeiden, liegt in der Nullstellung zumeist eine federbelastete Vorspannung der Stellvorrichtung auf einen gewissen Restkolbenhub vor. Damit hieraus jedoch keine Förderung von Kältemittel resultiert, was zur Vereisung des Verdampfers und zur Mangelschmierung des Verdichters führen könnte, wird regelmäßig ein Vorspannventil vor den Austritt des Verdichters gesetzt. Dieses ist meist als vorgespanntes Rückschlagventil ausgebildet und bewirkt eine Kältemittelsperre bis zu seinem Öffnungsdruck. Dieser reicht dann aus, um die Kolben des Verdichters ausreichend gegen die Vorspannung zu belasten, so daß in der Nullstellung der Stellvorrichtung tatsächlich eine Nullförderung erreicht ist.

EP 1 134 467 B1 beschreibt ein Expansionsorgan einer Kälteanlage, bei dem in der gleichen Baueinheit ein Bypassventil vorgesehen ist, welches bei Überschreiten eines bestimmten Absolutdrucks auf der Hochdruckseite der Kälteanlage öffnet und eine zumindest teilweise Überbrückung des als Festdrossel ausgeformten Expansionsorgans bewirkt.

Es ist die Aufgabe der Erfindung, eine Klimaanlage anzugeben, bei der eine erhöhte Flexibilität bei der Anordnung der funktionellen Bauteile besteht.

Diese Aufgabe wird für eine eingangs genannte Klimaanlage erfindungsgemäß mit den kennzeichnenden Merkmalen des Anspruchs 1 gelöst.

Durch die erfindungsgemäße Anordnung des Vorspannventils nach dem Verdichter und nicht mehr innerhalb des Verdichters bzw. der Baueinheit Verdichter ist es ermöglicht, die verwendeten Verdichter weiter zu standardisieren und das Vorspannventil individuell an die konkreten weiteren Baugruppen der Klimaanlage anzupassen. Dies kann sowohl logistische Vorteile haben als auch eine verbesserte Wartung und vereinfachte Justage des Vorspannventils ermöglichen.

Vorteilhaft weist der Verdichter kein Kupplungselement zum betriebsgemäßen an- und abkuppeln an einen Antrieb auf. Solche kupplungslosen Verdichter sind in besonderem Maße auf ein Vorspannventil angewiesen, um einen Betriebsmodus mit laufendem Antrieb, aber ohne Förderung zu ermöglichen.

In bevorzugter Ausführung ist der Verdichter ein Kolbenverdichter mit einer Stellvorrichtung zur Einstellung eines Kolbenhubs. Diese Verdichter sind praxiserprobt und weit verbreitet.

In besonders bevorzugter Ausführung ist das Kältemittel R 744 (Kohlendioxid). Bei R 744-Kältekreisen treten wegen der thermodynamischen Eigenschaften des Kältemittels besonders hohe Drücke und Temperaturen nach Verdichter auf. Hierbei ist ein feinjustiertes und gut zugängliches Vorspannventil von Vorteil, da jede unnötige weitere Druckerhöhung des Kältemittels nach Verdichter besonders nachteilig ist.

In einer bevorzugten Ausführungsform ist das Vorspannventil als gemeinsame Baugruppe mit dem Expansionsorgan ausgebildet. Dies hat den besonderen Vorteil, daß die Entspannung des durch das Vorspannventil bedingten Zusatzdrucks am gleichen Ort wie die übrige Expansion stattfindet, was insgesamt eine verbesserte Effizienz der Klimaanlage nach sich zieht. In vorteilhafter und einfacher Bauweise ist dabei das Vorspannventil in Serie vor einer Drosselöffnung angeordnet ist, wobei zudem ein Bypassventil zur Umgehung der Drosselöffnung in der gemeinsamen Baugruppe vorgesehen ist. Das Bypassventil ist zugleich eine Berstsicherung gegen zu hohe Drücke, welche insbesondere bei R 744-Anlagen unter bestimmten Betriebsbedingungen auftreten können.

In besonders einfacher und kostengünstiger Ausgestaltung ist das Vorspannventil zugleich als das Expansionsorgan ausgebildet. Neben den zuvor genannten thermodynamischen Vorzügen der Anordnung von Expansionsorgan und Vorspannventil am gleichen Ort ergibt sich der weitere Vorteil der Einsparung von Bauteilen oder Bearbeitungsschritten von Bauteilen. In vorteilhafter Weiterbildung ist zudem ein Bypassventil zur Umgehung des als Expansionsorgan fungierenden Vorspannventils vorgesehen.

In alternativer Ausführung kann das Vorspannventil je nach Anforderungen auch an dem Wärmetauscher angeordnet und mit diesem als gemeinsame Baugruppe ausgebildet sein. Wiederum alternativ kann das Vorspannventil als gemeinsame Baugruppe mit einem zusätzlichen inneren Wärmetauscher ausgebildet sein, wie er insbesondere bei R 744-Anlagen Verwendung findet.

Weitere Vorteile und Merkmale der Erfindung ergeben sich aus den nachfolgend beschriebenen Ausführungsbeispielen sowie aus den abhängigen Ansprüchen.

Nachfolgend werden bevorzugte Ausführungsbeispiele der erfindungsgemäßen Klimaanlage beschrieben und anhand der anliegenden Zeichnungen näher erläutert.
- Fig. 1: zeigt eine schematische Ansicht einer erfindungsgemäßen Klimaanlage, wobei verschiedene mögliche Positionen des Vorspannventils eingezeichnet sind.
- Fig. 2: zeigt eine schematische Detailansicht eines Expansionsorgans eines ersten bevorzugten Ausführungsbeispiels einer Klimaanlage gemäß dem Schema aus Fig. 1, wobei das Vorspannventil am Expansionsorgan vorgesehen ist.
- Fig. 3: zeigt eine schematische Detailansicht eines Expansionsorgans eines zweiten bevorzugten Ausführungsbeispiels einer Klimaanlage gemäß dem Schema aus Fig. 1.

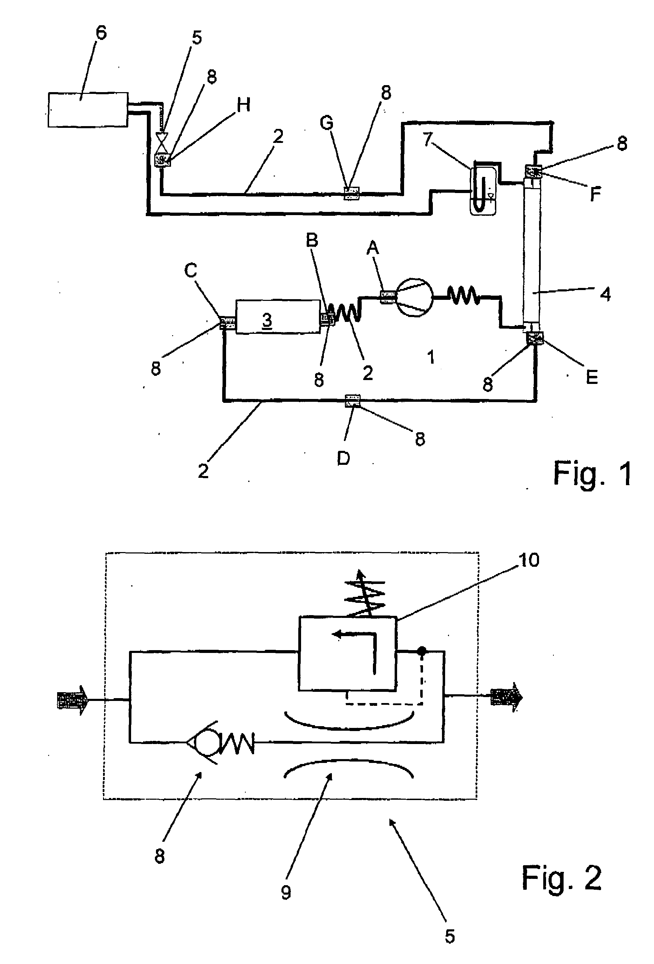

Die in Fig. 1 schematisch dargestellte Klimaanlage wird mit dem Kältemittel R 744 (Kohlendioxid) betrieben. Das Kältemittel wird zunächst von einem Verdichter 1 angesaugt, komprimiert und über eine Leitung 2 einem Wärmetauscher bzw. Gaskühler 3 zugeführt, der das durch die Kompression erhitzte Kältemittel im allgemeinen durch Wärmetausch mit Außenluft abkühlt.

Nachfolgend durchläuft das Kältemittel einen wie für CO2-Klimaanlagen üblichen inneren Wärmetauscher 4, bei dem weitere Wärme an das expandierte Kältemittel abgegeben wird, das von dem Verdichter angesaugt wird. Nach dem inneren Wärmetauscher 4 tritt das verdichtete Kältemittel durch ein Expansionsorgan 5, in dem es entspannt wird. Hierauf tritt das Kältemittel in einen Verdampfer 6 ein, in dem auf bekannte Weise die nutzbare Abkühlung durch Verdampfung erfolgt. Nachfolgend durchläuft das Kältemittel einen Sammler bzw. Akkumulator mit integriertem Trockner 7 sowie den bereits beschriebenen inneren Wärmetauscher, bevor es wieder in den Verdichter 1 eintritt und der Kreis geschlossen ist.

Der Verdichter 12 ist vom Typ eines Axialkolbenverdichters mit einer Stellvorrichtung (nicht dargestellt), mittels derer der Kolbenhub kontinuierlich bis auf Null verstellbar ist. Zudem ist der Verdichter fest mit einem Antriebsmotor (nicht dargestellt), etwa über einen Keilriemen, gekoppelt. Somit ist die Nullstellung der Stellvorrichtung die bevorzugte Möglichkeit, die Verdichtung und Förderung von Kältemittel zu stoppen. Um eine solche Verstellung mechanisch zuverlässig zu realisieren, ist allerdings der Kolbenhub über eine Vorspannfeder auch bei der Nullstellung der Stellvorrichtung auf einen gewissen freien Minimalhub eingestellt. Zur Erlangung eines tatsächlichen Nullhubs bzw. der Nullförderung bedarf es eines Mindestdrucks auf der Hochdruckseite des Kompressors; ansonsten findet eine ungünstige Restförderung von Kältemittel statt, Dieser Mindestdruck ist über ein dem Kompressor nachgeordnetes Vorspannventil 8 realisierbar. In Fig. 1 sind für das Vorspannventil 8 jeweils acht verschiedene alternative Positionen A bis H eingezeichnet:
A: nach Verdichter 1 und außerhalb desselben;
B: am Eingang des Wärmetauschers 3 und baueinheitlich mit diesem;
C: am Ausgang des Wärmetauschers 3 und baueinheitlich mit diesem;
D: in der Leitung vom Wärmetauscher 3 zum inneren Wärmetauscher 4;
E: am Eingang des inneren Wärmetauschers 4 und baueinheitlich mit diesem;
F: am Ausgang des inneren Wärmetauschers 4 und baueinheitlich mit diesem;
G: in der Leitung vom inneren Wärmetauscher 4 zum Expansionsorgan 5;
H: am Ort des Expansionsorgans 5.

Die nachfolgend beschriebenen bevorzugten Ausführungsbeispiele sind Unterfälle der Position H. Diese hat den besonderen thermodynamischen Vorteil, daß die Expansion des Vorspannventil-Überdrucks und des weiteren Drucks am gleichen Ort unmittelbar vor dem Verdampfer erfolgt.

Im ersten Ausführungsbeispiel gemäß Fig. 2 liegt das Vorspannventil 8 in baulicher Einheit (symbolisiert durch punktierten Rahmen) mit einer Festdrossel 9 und einem Bypassventil 10 vor. Kältemittelein- und austritt sind jeweils durch Pfeile symbolisiert. Das "eigentliche" Expansionsorgan 5 der Klimaanlage ist bei dieser Ausführung durch die Festdrossel 9 gebildet. Das Vorspannventil 8 befindet sich in Strömungsrichtung sequentiell vor der Fest-Festdrossel 9 und verschließt diese somit, sobald die Druckdifferenz über dem Expansionsorgan 5 einen bestimmten Wert nicht übersteigt.

Das Bypassventil 10 ist in einem zu Vorspannventil 8 und Festdrossel 9 parallelen Zweig mit gegenüber der Festdrossel deutlich größerem Querschnitt angeordnet. Wie durch das gewählte Symbol angedeutet, öffnet das Bypassventil 10 den parallelen Zweig, wenn der eingangsseitige Druck einen bestimmten Absolutwert erreicht, bzw, genauer den Außendruck von 1 bar um einen bestimmten Differenzdruck übersteigt. Hierdurch wird ein schneller Abbau des hochdruckseitigen Drucks in die Volumina der Niederdruckseite ermöglicht, um ein Bersten der Anlage durch Überdruck zu vermeiden. Eine mögliche detaillierte Ausgestaltung des gesamten Expansionsorgans gemäß dem ersten Ausführungsbeispiel ergibt sich aus einer Modifikation des in der Druckschrift EP 1 134 467 B1 gezeigten Moduls (siehe dort Fig. 1), wobei in den Kanal der Festdrossel zusätzlich ein Vorspannventil eingepreßt oder eingeschraubt wird.

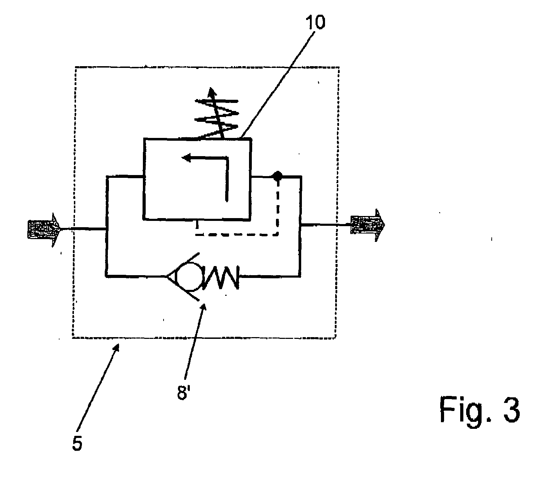

Das zweite bevorzugte Ausführungsbeispiel gemäß Fig. 3 entspricht weitgehend dem ersten Ausführungsbeispiel, wobei im Unterschied zum ersten Beispiel auf eine separate Festdrossel verzichtet wird. Vielmehr ist das Vorspannventil 8' so ausgebildet, daß sein maximaler Öffnungsquerschnitt dem der Festdrossel 9 des ersten Ausführungsbeispiels entspricht. Expansionsorgan 5 und Vorspannventil 8' werden somit identisch. Ferner ist in der Baueinheit des Expansionsorgans 5 des zweiten Ausführungsbeispiels ebenfalls ein Bypassventil wie 10 im Falle des ersten Ausführungsbeispiels in einem Parallelzweig vorgesehen. Als Modifikation des in der Druckschrift EP 1 134 467 B1 gezeigten Moduls (siehe dort Fig. 1) ist das zweite Ausführungsbeispiel wie folgt herstellbar: Der gesamte Kanal der Festdrossel wird aufgebohrt oder von vomeherein größer ausgebildet. In diesen vergrößerten Kanal wird das Vorspannventil 8' mit dem maximalen Drosselquerschnitt dicht eingepreßt oder eingeschraubt.

## Patentansprüche

1. Klimaanlage, insbesondere für ein Kraftfahrzeug, umfassend
einen Verdichter (1) zum Komprimieren eines Kältemittels mit einem Austritt für das komprimierte Kältemittel,
einen dem Verdichter (1) in Strömungsrichtung des Kältemittels nachgeordneten Wärmetauscher (3) zur Kühlung des Kältemittels, und
ein dem Wärmetauscher (3) nachgeordnetes Expansionsorgan (5) zur gezielten Druckerniedrigung des Kältemittels,
wobei ein ab einer definierten Druckdifferenz in einer Richtung geöffnetes Vorspannventil (8, 8') vorgesehen ist,
**dadurch gekennzeichnet,**
**daß** das Vorspannventil (8, 8') in Strömungsrichtung nach dem Verdichter (1) und vor dem Austritt des Expansionsorgans (5) vorgesehen ist.

2. Klimaanlage nach Anspruch 1, **dadurch gekennzeichnet, daß** der Verdichter (1) kein Kupplungselement zum betriebsgemäßen an- und abkuppeln an einen Antrieb aufweist.

3. Klimaanlage nach Anspruch 1 oder 2, **dadurch gekennzeichnet, daß** der Verdichter (1) ein Kolbenverdichter mit einer Stellvorrichtung zur Einstellung eines Kolbenhubs ist.

4. Klimaanlage nach einem der vorhergehenden Ansprüche, **dadurch gekennzeichnet, daß** das Kältemittel R 744 (Kohlendioxid) ist.

5. Klimaanlage nach einem der vorhergehenden Ansprüche, **dadurch gekennzeichnet, daß** das Vorspannventil (8. 8') als gemeinsame Baugruppe mit dem Expansionsorgan (5) ausgebildet ist.

6. Klimaanlage nach Anspruch 5, **dadurch gekennzeichnet, daß** das Vorspannventil (8) sequentiell vor einer Drosselöffnung (9) angeordnet ist, wobei zudem ein Bypassventil (10) zur Umgehung der Drosselöffnung (9) in der gemeinsamen Baugruppe vorgesehen ist.

7. Klimaanlage nach einem der Ansprüche 1 bis 4, **dadurch gekennzeichnet, daß** das Vorspannventil (8') zugleich als das Expansionsorgan (5) ausgebildet ist.

8. Klimaanlage nach Anspruch 7, **dadurch gekennzeichnet, daß** ein Bypassventil (10) zur Umgehung des als Expansionsorgan (5) fungierenden Vorspannventils (8') vorgesehen ist.

9. Klimaanlage nach einem der Ansprüche 1 bis 4, **dadurch gekennzeichnet, daß** das Vorspannventil (8) an dem Wärmetauscher (3) angeordnet und mit diesem als gemeinsame Baugruppe ausgebildet ist.

10. Klimaanlage nach der Ansprüche 1 bis 4, **dadurch gekennzeichnet, daß** das Vorspannventil (8) als gemeinsame Baugruppe mit einem zusätzlichen inneren Wärmetauscher (4) ausgebildet ist.
